Europäisches Patentamt

European Patent Office

Office européen des brevets

(19)

(11) Veröffentlichungsnummer: **0 370 370**
**A2**

(12) **EUROPÄISCHE PATENTANMELDUNG**

(21) Anmeldenummer: 89121108.8

(22) Anmeldetag: 15.11.89

(51) Int. Cl.⁵: **B32B 7/02, B32B 27/18**

(30) Priorität: 19.11.88 DE 3839218

(43) Veröffentlichungstag der Anmeldung:
30.05.90 Patentblatt 90/22

(84) Benannte Vertragsstaaten:
**AT BE CH DE FR GB IT LI LU NL SE**

(71) Anmelder: **HOECHST AKTIENGESELLSCHAFT**
**Postfach 80 03 20**
**D-6230 Frankfurt am Main 80(DE)**

(72) Erfinder: **Dinter, Peter, Dipl.-Ing.**
**Am Wiesenberg 4**
**D-6227 Hallgarten(DE)**
Erfinder: **Grolig, Gerhard, Dr. Dipl.-Phys.**
**Gartenstrasse 6**
**D-6082 Mörfelden-Walldorf(DE)**
Erfinder: **Spross, Bernd**
**Drosselweg 2a**
**D-6204 Taunusstein 2(DE)**
Erfinder: **Roth, Werner, Dr. Dipl.-Phys.**
**Kreuzheck 2**
**D-6239 Eppstein(DE)**

(54) Dimensionsstabiler Verbundkörper.

(57) Ein dimensionsstabiler Verbundkörper wird durch Verpressen eines Stapels verstreckter Kunststoffolien unter Temperaturanwendung hergestellt. Gleichzeitig werden Funktionsschichten in die Matrix des Verbundkörpers eingebracht und/oder dekorative Schichten auf die Oberfläche des Verbundkörpers aufgebracht. Die Oberfläche des Verbundkörpers kann desweiteren mittels strukturierter Preßmatrizen reliefartig profiliert werden.

EP 0 370 370 A2

# DIMENSIONSSTABILER VERBUNDKÖRPER

Die Erfindung betrifft einen dimensionsstabilen Verbundkörper in Gestalt einer ebenen Platte, eines Rohres oder eines nicht ebenen Raumgebildes, aus einer Vielzahl übereinander geschichteter, miteinander verpreßter, thermoplastischer Kunststoffolien, die zumindest einseitig mit einer gegenüber der Basisschicht niedriger schmelzenden Siegelschicht beschichtet und uni- und/oder biaxial verstreckt sind.

Einen beachtlichen Anteil an dem stark diversifizierten Markt für Platten und Tafeln aus Kunststoff haben Produkte mit dekorativen und/oder funktionellen Schichten, wobei letztere entweder auf die Oberfächen der Platte aufgebracht oder in die Matrix der Platte eingelagert sein können. Hierunter sind oberflächlich strukturierte, z.B. geprägte oder reliefartig ausgeformte Platten und auch solche durch Farb-, Dekor-, Metall- oder Schutzschichten veredelte Produkte für Innen- und Außenanwendungen im Bauwesen, im Sanitärbereich, im Fahrzeugbau, in der Möbelindustrie, im Messestandbau und in der Werbung einzuordnen.

Neben dem dekorativen, ästhetischen Erscheinungsbild sowie Erfüllung der den Schichten zugedachten Funktionen werden an derartige Erzeugnisse aber auch hinsichtlich ihrer technischen Gebrauchseigenschaften, wie mechanische Festigkeit, Kratzempfindlichkeit, Witterungs beständigkeit, Temperaturbeständigkeit, Schlagfestigkeit etc., entsprechende Anforderungen gestellt. Bezüglich der mechanischen Stabilität lassen viele Kunststoffe, insbesondere die preiswerten Standardmaterialien, noch viel zu wünschen übrig.

In der AT-PS 383 542 ist ein steifer Formkörper, wie eine Platte oder ein Rohr, aus einer Vielzahl übereinander und/oder nebeneinander geschichteter und miteinander verpreßter, orientierter, d.h. verstreckter, thermoplastischer Kunststoffträger in Folien-, Bändchen-, Monofil- oder Faserform beschrieben. Die verstreckten Kunststoffträger an den beim Über- und/oder Nebeneinanderschichten zur Anlage gelangenden Seiten sind mit thermoplastischem Kunststoff beschichtet, wobei das Beschichtungsmaterial eine niedrigere Kristallitschmelztemperatur aufweist als die Kunststoffträger und die Dicke von je zwei aneinanderliegenden Beschichtungsmaterialien geringer ist als die Dicke eines Kunststoffträgers.

Das in der österreichischen Patentschrift AT-PS 383 542 vorgeschlagene Verfahren liefert hochfeste, mechanisch stabile Platten durch Druckanwendung auf verstreckte, koextrudierte dünne Kunststoffolien, unter Einwirkung von Wärme, wobei die an den gegenseitigen Berührungsflächen mit thermoplastischem Kunststoff beschichteten Kunststoffträger bei einer Temperatur oberhalb der Kristallitschmelztemperatur des Beschichtungsmaterials und unterhalb der Kristallitschmelztemperatur des Kunst stoffträgers verpreßt werden. Dieses Verfahren bietet von seinem Grundprinzip her gegenüber alternativen Plattenherstelltechnologien, wie z.B. Extrusion, Gießen und Kalandrieren, die Möglichkeit, durch Verpressen bei erhöhter Temperatur einen nennenswerten Abfall der durch das Verstrecken eines einzelnen Kunststoffträgers erzielten günstigen mechanischen und physikalischen Eigenschaften zu verhindern, so daß der Formkörper, trotz seiner größeren, die Abmessungen des einzelnen Kunststoffträgers wesentlich überschreitenden Dimensionen näherungsweise die mechanischen und technologischen Eigenschaften eines einzelnen verstreckten Kunststoffträgers aufweist. Da ein Folienstapel aus einzelnen, gleichartigen oder unterschiedlichen Folien beliebig geschichtet und gepreßt wird, können einerseits über die Art und den Aufbau der verwendeten Folien gezielte Funktionsschichten entweder auf die Oberfläche der Platte aufgebracht oder in Form von Zwischenschichten in die Platte eingefügt werden, und andererseits durch die Auswahl geeigneter Preßmatrizen gleichzeitig entsprechende Oberflächenstrukturierungen geschaffen werden.

Aufgabe der vorliegenden Erfindung ist es, einen hochfesten, formstabilen Verbundkörper der eingangs beschriebenen Art als ebene oder sphärisch geformte Verbundplatte weiterzuentwickeln und zur Erhöhung der Anzahl der Gebrauchseigenschaften dekorative und/oder funktionelle Schichten in den Verbundkörper einzubringen sowie dessen Oberflächen gegebenenfalls reliefartig zu strukturieren.

Diese Aufgabe wird erfindungsgemäß dadurch gelöst, daß der Verbundkörper auf einer seiner Oberflächen mindestens eine Funktionsschicht aufweist, die mit der anliegenden Kunststoffolie der übereinandergeschichteten Kunststoffolien durch thermisches Pressen untrennbar zu dem Verbundkörper zusammengefügt ist.

In einer anderen Ausführungsform der Erfindung enthält der Verbundkörper in seiner Kunststoffmatrix mindestens eine Funktionsschicht, die mit den an ihren beiden Seiten anliegenden Kunststoffolien durch thermisches Pressen untrennbar zu dem Verbundkörper zusammengefügt ist.

In Weiterbildung der Erfindung ist die Funktionsschicht eine unverstreckte, mono- oder biaxial verstreckte Folie, deren Polymermatrix modifiziert und selbsttragend ist und die aus demselben Polymer wie die Kunststoffolien des Verbundkörpers oder einem davon abweichenden Polymerwerkstoff besteht, und zumindest auf einer Seite eine Heißsiegelschicht trägt.

Die weitere Ausgestaltung der Erfindung ergibt sich aus den Patentansprüchen 4 bis 13.

Ein wesentlicher Vorteil bei der Fertigung des Verbundkörpers besteht darin, daß durch die Verwendung bereits vorgefertigter, zumindest eine Funktionsschicht tragender Folien, die von einer Rolle abgezogen werden, eine problemlose schnelle Produktion, insbesondere deren zügige Umstellung, durchführbar ist, wodurch eine kostengünsige Herstellung ermöglicht wird.

Geeignet zur Herstellung des erfindungsgemäßen vielschichtigen Verbundkörpers sind thermoplastische Kunststoffolien - insbesondere aus der Gruppe der Polyester und der Polyolefine - mit mindestens einer Heißsiegelschicht.

Unter Polyester sind Polyester-Homo- und Copolymere, Gemische verschiedener Polyester sowie Abmischungen und Blends von Polyestern mit anderen Polymeren zu verstehen. Die vorgenannten Polymere können durch anorganische oder organische Additive im Hinblick auf ihre Gebrauchseigenschaften rezepturiert sein.

Als Polyolefine werden insbesondere Propylenhomopolymere oder Copolymere eingesetzt, wobei letztere zum überwiegenden Teil aus Propyleneinheiten zusammengesetzt sind.

Als Heißsiegelschichten werden die zu diesem Zweck bei der Folienherstellung üblichen Beschichtungen verwendet. Es sind dies bevorzugt statistische Copolymere aus Ethylen- und Propylenbausteinen sowie Copolyester, enthaltend Ethylenterephthalat- und Isophthalateinheiten.

Was die einzelnen Folienlagen des Verbundkörpers betrifft, handelt es sich um Folien der vorbeschriebenen Art, die eine Dicke im Bereich von 10 bis 300 µm, insbesondere von 40 bis 200 µm, aufweisen. Die Dicke der Heißsiegelschicht, die ein- oder beidseitig auf der einzelnen Folienschicht aufgebracht ist, überschreitet üblicherweise 10 % der Dicke der Folienschicht nicht und liegt in einem Bereich von 0,5 bis 5 µm.

Bei den Funktionsschichten tragenden Deckoder Zwischenlagefolien, die dem Verbundkörper die jeweilige Gebrauchseigenschaft verleihen, handelt es sich im einfachsten Falle um dieselben Folien, aus denen die Matrix des Verbundkörpers gepreßt ist. In erweiterter Form können die mit Funktionsschichten ausgerüsteten Folien, aber auch aus gegenüber der Matrix des Verbundkörpers unterschiedlichen Polymermaterialien bestehen, so daß für ihre Verbindung mit den angrenzenden Folien unter Umständen geeignete Haftvermittler- oder Kleberschichten eingebaut werden müssen.

Das Eigenschaftsprofil der in den Verbundkörper einzubauenden Funktionsschichten kann z.B.

durch chemische Modifizierung der Polymermatrix der zu verwendenden Folie selbst, durch den Einschluß von Farbstoffen oder Pigmenten in die Folie oder durch ausschließlich auf die Oberfläche der Folie beschränkte Maßnahmen, wie Beschichten, Bedrucken oder Metallisieren, erreicht werden. Dabei hängt es vom jeweiligen Anwendungsfall ab, ob der Veredelungsschritt für die die Funktionsschicht tragende Folie voll- oder teilflächig durchgeführt wird.

Durch Anwendung der vorbeschriebenen Maßnahmen lassen sich u.a. Verbundplatten herstellen, die elektrisch beheizbar sind, elektrostatische Aufladungen ableiten oder elektromagnetische Strahlungen abschirmen. Eine Möglichkeit hierzu bietet sich z.B. über den Einbau von Funktionsschichten aus elektrisch leitfähigen Polymeren auf der Basis Polyacetylen, Polypyrrol, Polyparaphenylen, Polyparaphenylensulfid, Polythiophen oder ladungsübertragender Komplexe. Alternativ zu den vorgenannten Produkten kommen auch Folien in Frage, deren Polymermatrix durch Einarbeiten elektrisch leitfähiger Pigmente, wie z.B. Ruß, Graphit oder Kohlefasern, modifiziert worden ist.

Eine weitere Variante zum Einbringen leitfähiger Funktionsschichten in den erfindungsgemäßen Verbundkörper stellen Folien dar, auf denen elektrisch leitende Schichten durch Beschichten, Bedrucken, Vakuummetallisieren oder Sputtern aufgebracht worden sind. Das Sputtern ermöglicht, im Vergleich zu den anderen Technologien, neben dem Erzeugen transparenter, elektrisch leitfähiger Schichten auch das Abscheiden transparenter optischer Funktionsschichten mit selektiver Filterwirkung gegenüber bestimmten Wellenlängen der Lichtstrahlung. Verwendung finden derartige Schichten, die im allgemeinen aus Kombinationen unterschiedlicher Metallschichten oder Kombinationen von Metalloxid- und Metallschichten bestehen, in der Bauindustrie als Wärme-und Sonnenschutzscheiben für die Gebäudeverglasung. Werden mit solchen Sputterschichten ausgerüstete Folien in einem erfindungsgemäßen Verbundkörper eingebaut, so ist das Produkt gegenüber Glas schlagunempfindlicher und gewichtsmäßig bedeutend leichter, was sowohl bei der Verglasung von Gebäuden als auch von Fahrzeugen Vorteile mit sich bringt.

Werden mit Informationen oder Motiven bedruckte Folien in einem erfindungsgemäßen Verbundkörper eingebaut, so können hochfeste, gegenüber Vandalismus beständige Werbeträgerflächen, die z.B. im Messestandbau einsetzbar sind, hergestellt werden.

Eine weitere Ausführungsform der Erfindung betrifft dekorativ gestaltete Verbundkörper mit Hilfe sogenannter Prägefolien. Hierbei handelt es sich um Trägerfolien, die üblicherweise mit mehreren Funktionsschichten ausgerüstet sind, wobei diese beim thermischen Preßvorgang auf die Oberfläche des Verbundkörpers transferiert werden. Beim Entformen des Verbundkörpers wird dann abschließend die Trägerfolie abgezogen.

Werden beim Pressen des Verbundkörpers anstelle vollflächiger Preßplatten strukturierte Preßmatrizen verwendet, im einfachsten Falle reichen gestanzte Lochbleche aus, so kann zusätzlich zu der partiellen Verpressung des Folienstapels zu einem Verbundkörper, die zu einer reliefartigen Oberfläche führt, die teilflächig, musterartig erfolgende Übertragung der Funktionsschichten von Prägefolien zur Oberflächengestaltung benutzt werden.

Im Falle des Übertrags von Funktionsschichten der Prägefolien auf den Verbundkörper liegen die Dekorschich ten ungeschützt auf den Außenflächen des Verbundkörpers. Es ist dann ratsam, durch Aufbringen von Schutzschichten, beispielsweise in Form selbsttragender Schutzfolien oder von Beschichtungen aus Lösungen, wobei für letztere thermische, UV- oder elektronenstrahlhärtende Systeme in Betracht kommen, die Oberfläche des Verbundkörpers zu "versiegeln".

Weitere Anwendungsmöglichkeiten für derartige Verbundkörper bestehen im Ersatz von Glasspiegeln oder auch Reflektoren. Nachteile der Glasspiegel sind ihre leichte Zerbrechlichkeit, was z.B. ihren Einsatz in der Automobilbranche einschränkt, und ihre aufwendige und kostspielige Fertigung. Durch das Verpressen von biaxial verstreckten, heißsiegelfähigen Polypropylen-oder Polyesterfolien mit entsprechenden Deckfolien, die einseitig mit Metall, z.B. Aluminium, Silber oder Chrom, bedampft oder besputtert sind, lassen sich auf relativ einfache, preiswerte Weise stoßunempfindliche, bei Bruch nicht splitternde dimensionsstabile Spiegel herstellen.

**Ansprüche**

1. Dimensionsstabiler Verbundkörper in Gestalt einer ebenen Platte, eines Rohres oder eines nicht ebenen Raumgebildes, aus einer Vielzahl übereinander geschichteter, miteinander verpreßter, thermoplastischer Kunststoffolien, die zumindest einseitig mit einer gegenüber der Basisschicht niedriger schmelzenden Siegelschicht beschichtet und uni- und/oder biaxial verstreckt sind, dadurch gekennzeichnet, daß der Verbundkörper auf einer seiner Oberflächen mindestens eine Funktionsschicht aufweist, die mit der anliegenden Kunststoffolie der übereinander geschichteten Kunststoffolien durch thermisches Pressen untrennbar zu dem Verbundkörper zusammengefügt ist.

2. Dimensionsstabiler Verbundkörper in Gestalt einer ebenen Platte, eines Rohres oder eines nicht ebenen Raumgebildes, aus einer Vielzahl übereinander geschichteter, miteinander verpreßter, thermoplastischer Kunststoffolien, die zumindest einseitig mit einer gegenüber der Basisschicht niedriger schmelzenden Siegelschicht beschichtet und uni- und/oder biaxial verstreckt sind, dadurch gekennzeichnet, daß der Verbundkörper in seiner Kunststoffmatrix mindestens eine Funktionsschicht enthält, die mit den an ihren beiden Seiten anliegenden Kunststoffolien durch thermisches Pressen untrennbar zu dem Verbundkörper zusammengefügt ist.

3. Dimensionsstabiler Verbundkörper nach Anspruch 1 oder 2, dadurch gekennzeichnet, daß die Funktionsschicht eine unverstreckte, mono-́ oder biaxialverstreckte Folie ist, deren Polymermatrix modifiziert und Selbsttragend ist und die aus demselben Polymer wie die Kunststoffolien des Verbundkörpers oder einem davon abweichenden Polymerwerkstoff besteht, und zumindest auf einer Seite eine Heißsiegelsohicht trägt.

4. Dimensionsstabiler Verbundkörper nach den Ansprüchen 1 bis 3, dadurch gekennzeichnet, daß die Funktionsschicht aus elektrisch leitfähigen Polymeren, wie Polyacetylen, Polypyrrol, Polyparaphenylen, Polyparaphenylensulfid, Polythiophen, ladungsübertragenden Komplexen oder aus durch Additive, wie Ruß, Graphit, Kohlefasern oder Metallpulver, leitfähig gemachten Polymer-Werkstoffen besteht.

5. Dimensionsstabiler Verbundkörper nach den Ansprüchen 1 bis 4, dadurch gekennzeichnet, daß die Funktionsschicht eine selbsttragende, zumindest einseitig durch Beschichten, Bedrucken, Metallbedampfen oder Sputtern voll- oder teilflächig beschichtete, biaxial verstreckte Folie ist, die aus demselben Polymer wie die Kunststofffolien des Verbundkörpers oder aus einem anderen Polymer- Werkstoff besteht und einseitig mit einer Heißsiegelschicht ausgestattet ist.

6. Dimensionsstabiler Verbundkörper nach den Ansprüchen 1 bis 5, dadurch gekennzeichnet, daß die durch Be schichten, Bedrucken, Metallbedampfen oder Sputtern auf der Folie gebildete Funktionsschicht elektrisch leitfähig ist und in Form wäßriger Dispersionen, Lösungsmittellacken oder im Vakuum niedergeschlagenen Metalldämpfen bzw. -partikeln aufgebracht ist.

7. Dimensionsstabiler Verbundkörper nach den Ansprüchen 1 bis 6, dadurch gekennzeichnet, daß die in den Verbundkörper integrierte Folie eine optisch transparente Funktionsschicht auf Basis von Metallen, Metalloxiden, -nitriden, -karbiden oder entsprechenden Kombinationen dieser Metalle und Metallverbindungen aufweist, und daß die Funktionsschicht Licht absorbiert oder reflektiert.

8. Dimensionsstabiler Verbundkörper nach den Ansprüchen 1 bis 7, dadurch gekennzeichnet, daß die Funktionsschicht eine von einer Trägerfolie beim thermischen Pressen der Kunststoffolien zu dem Verbundkörper auf diesen voll- oder teilflächig transferierte Schicht ist.

9. Dimensionsstabiler Verbundkörper nach den Ansprüchen 1 bis 8, dadurch gekennzeichnet, daß zur Verankerung der Funktionsschicht in und/oder auf dem Verbundkörper Haftvermittlerschichten auf der die Funktionsschicht tragenden Folie vorhanden sind.

10. Dimensionsstabiler Verbundkörper nach den Ansprüchen 1 bis 9, dadurch gekennzeichnet, daß die Funktionsschicht durch eine Schutzschicht gegen mechanische Beschädigungen oder Strahleneinwirkung geschützt ist.

11. Dimensionsstabiler Verbundkörper nach den Ansprüchen 1 bis 10, dadurch gekennzeichnet, daß der Verbundkörper eine reliefartige Oberfläche aufweist, die durch Übertragen der Funktionsschicht mittels oberflächlich strukturierter Preßmatrizen geformt ist.

12. Dimensionsstabiler Verbundkörper nach Anspruch 1 oder 2, dadurch gekennzeichnet, daß die Kunststoffolien eine Dicke im Bereich von 10 bis 300 $\mu$m, insbesondere von 40 bis 200 $\mu$m, aufweisen.

13. Dimensionsstabiler Verbundkörper nach den Ansprüchen 3 und 12, dadurch gekennzeichnet, daß die Dicke der Heißsiegelschicht bis zu 10 % der Dicke einer Kunststoffolie beträgt.

14. Dimensionsstabiler Verbundkörper nach Anspruch 13, dadurch gekennzeichnet, daß die Dicke der Heißsiegelschicht 0,5 bis 5 $\mu$m beträgt.